# FASCICULE DE BREVET EUROPEEN

(11) **EP 2 066 562 B1**
(45) Date de publication et mention de la délivrance du brevet: **03.08.2011**
(21) Numéro de dépôt: 07858391.1
(22) Date de dépôt: 28.09.2007
(51) Int. Cl.: B64C 1/00, B64D 11/00

(54) **AERONEF COMPRENANT UN FUSELAGE AVEC PLANCHER S'ETENDANT DANS LE PLAN LONGITUDINAL DU FUSELAGE**
FLUGZEUG MIT RUMPF MIT ÜBER DIE LÄNGSFLÄCHE DES RUMPFES AUSGEDEHNTEM BODEN
AIRCRAFT COMPRISING A FUSELAGE WITH A FLOOR EXTENDING IN THE LONGITUDINAL PLANE OF THE FUSELAGE

(30) Priorité: 29.09.2006 FR 0654016; 27.10.2006 US 854699 P
(43) Date de publication de la demande: 10.06.2009
(73) Titulaire: Airbus, 31700 Blagnac Cédex (FR)
(72) Inventeur: BOCK Thomas-Mathias, F-31330 Grenade-Sur-Garonne (FR)
(74) Mandataire: Stankoff, Hélène
(86) Numéro de dépôt international: PCT/FR2007/001594
(87) Numéro de publication internationale: WO 2008/040868

(56) Documents cités:
- EP-A- 0 662 411
- EP-A1- 1 332 961
- DE-A1- 10 145 276
- FR-A- 1 167 722
- US-A1- 2003 080 243
- US-B2- 6 834 833

## Description

La présente invention concerne un aéronef comprenant un fuselage comportant un plancher s'étendant dans un plan longitudinal du fuselage.

De manière générale, la présente invention s'applique, dans le domaine de l'aéronautique, à tous les types d'avion dans lequel un plancher permet de séparer un premier espace d'un second espace logés dans le fuselage.

En particulier, lorsque l'aéronef repose sur le sol, le plancher s'étend dans un plan longitudinal horizontal du fuselage et sépare un premier espace supérieur d'un second espace inférieur, logé sous le premier espace.

Traditionnellement, le premier espace supérieur est adapté au transport des passagers et le second espace inférieur constitue la soute à bagages.

Généralement, le fuselage d'un tel avion a une forme cylindrique, le plancher s'étendant dans la largeur de la section transversale du fuselage. Le plancher est positionné de telle sorte que la plus grande distance séparant le fuselage dudit plancher dans le premier espace supérieur est supérieure à la plus grande distance séparant le fuselage du plancher dans le second espace inférieur.

Compte tenu de la forme cylindrique du fuselage, la distance séparant le fuselage du plancher dans l'un ou l'autre des espaces varie dans la section transversale du fuselage, et en particulier, est très grande au centre du fuselage, au niveau de l'axe de symétrie de la section transversale perpendiculaire au plancher et très faible sur les côtés, dans les zones de jonction du plancher et du fuselage.

Ainsi, s'il est possible pour une personne de circuler aisément dans un couloir aménagé au niveau du centre du fuselage, la hauteur disponible entre le plancher et le fuselage à proximité des côtés du fuselage est faible et ne permet pas généralement à une personne de se tenir debout.

Par ailleurs, lorsque les passagers sont assis à proximité du fuselage dit côté "fenêtre" du fuselage, il n'existe qu'un faible espace entre la tête du passager assis et la paroi du fuselage.

De même, afin de conserver une hauteur suffisante au-dessus des sièges disposés sur les côtés du fuselage, l'espace disponible pour loger les bagages au niveau de casiers fixés sous le fuselage est nécessairement restreint.

On connaît également dans les documents US 6 834 833 et FR1167722 qui monte toutes les caractéristiques du préambule de la revendication 1, un fuselage d'aéronef qui n'est pas cylindrique mais présente une forme ovale dans sa section transversale.

La section transversale du fuselage présente ainsi un diamètre horizontal d'une valeur supérieure à celle du diamètre vertical du fuselage dans cette même section transversale.

Il est possible ainsi d'obtenir un espace pour les passagers plus large et mieux logeable.

Toutefois, ce type de fuselage présente les mêmes inconvénients que le fuselage cylindrique dès lors que les passagers n'ont pas la possibilité de se tenir debout dans les zones latérales du fuselage et qu'il n'existe qu'un très faible espace au niveau de la tête des passagers assis dans les sièges latéraux, à proximité immédiate de la paroi du fuselage.

La présente invention a pour but de résoudre les inconvénients précités et de proposer un aéronef ayant un fuselage de forme améliorée, telle que définie par les caractéristiques de la revendication 1, permettant notamment d'améliorer le confort des passagers tant dans leurs déplacements que lorsqu'ils sont assis.

A cet effet, la présente invention vise un aéronef comprenant un fuselage comportant un plancher s'étendant dans un plan longitudinal dudit fuselage et séparant un premier espace d'un second espace logés dans le fuselage.

Selon l'invention, le fuselage comporte trois portions de fuselage constituées de portions d'arc de cercle dans la section transversale du fuselage, le premier espace comportant une portion de fuselage de longueur sensiblement égale à la largeur du plancher dans la section transversale du fuselage, la distance séparant ladite portion de fuselage et le plancher étant sensiblement constante suivant la largeur, et les deux autres portions de fuselage s'étendant d'une part entre ladite portion de fuselage et le plancher du premier espace et d'autre part, dans le second espace du fuselage.

Ainsi, grâce à cette forme particulière du fuselage, et notamment de la portion de fuselage particulière prévue dans un premier espace, la logeabilité des passagers dans ce premier espace est identique, en tout point du plancher, tant au centre du fuselage que sur les côtés.

Le fuselage comporte ainsi une forme particulière constituée d'au moins trois portions de fuselage raccordées les unes aux autres permettant de définir le premier espace et le second espace séparés par un plancher.

De préférence, ladite distance est supérieure ou égale à 1800 mm, et de préférence supérieure à 2000 mm.

Cette distance importante et sensiblement constante séparant la portion de fuselage du plancher dans toute sa largeur permet d'améliorer le confort des passagers assis à proximité des parois du fuselage, sur les côtés de l'avion dans sa section transversale, en ménageant un espace suffisant au-dessus de la tête de chaque passager assis.

Selon une caractéristique avantageuse de l'invention, ladite distance est comprise entre 2100 et 2200 mm, des moyens formant logement à bagages étant ménagés dans ledit premier espace à proximité de ladite portion de fuselage, la distance séparant lesdits moyens formant logement à bagages et ledit plancher étant supérieure à 1900 mm.

Ainsi, des espaces importants pour loger des bagages peuvent être prévus à proximité de la portion de fuselage dès lors que la distance séparant les moyens pour loger des bagages est supérieure, dans toute la largeur du fuselage, à 1900 mm, et permet ainsi à toute personne de se tenir debout quelle que soit sa position dans le premier espace de fuselage.

Selon les caractéristiques de l'invention, la jonction de la portion de fuselage avec chacune desdites deux autres portions de fuselage est réalisée sensiblement à l'aplomb respectivement de la jonction du plancher avec chacune desdites deux autres portions de fuselage.

Ainsi, le premier espace, défini par ladite portion de fuselage, le plancher et une partie desdites deux autres portions de fuselage, présente sensiblement un espace logeable intérieur de forme rectangulaire dans la section transversale du fuselage, particulièrement bien adapté non seulement au déplacement des passagers dans cet espace, mais également au logement de différents conteneurs en cas d'utilisation de l'aéronef pour le transport de fret.

D'autres particularités et avantages de l'invention apparaîtront encore dans la description ci-après.

Aux dessins annexés, donnés à titre d'exemples non limitatifs :
- la figure 1 est une vue schématique en coupe transversale d'un fuselage d'aéronef conforme à un premier mode de réalisation de l'invention et destiné au transport de passagers ;
- la figure 2 est une vue schématique en coupe transversale d'un fuselage d'aéronef identique à celui de la figure 1, et adapté au transport de fret ;
- la figure 3 est une vue schématique en coupe transversale d'un fuselage d'un aéronef selon un deuxième mode de réalisation de l'invention ;
- les figures 4A, 4B et 4C sont des vues schématiques en coupe transversale respectivement d'un fuselage cylindrique d'un aéronef de l'art antérieur et de deux fuselages d'aéronef conforme à deux modes de réalisation de l'invention ; et
- les figures 5A et 5B sont des vues schématiques en coupe transversale respectivement d'un fuselage cylindrique d'un aéronef de l'art antérieur de grandes dimensions et d'un fuselage d'un aéronef de grandes dimensions conforme à l'invention.

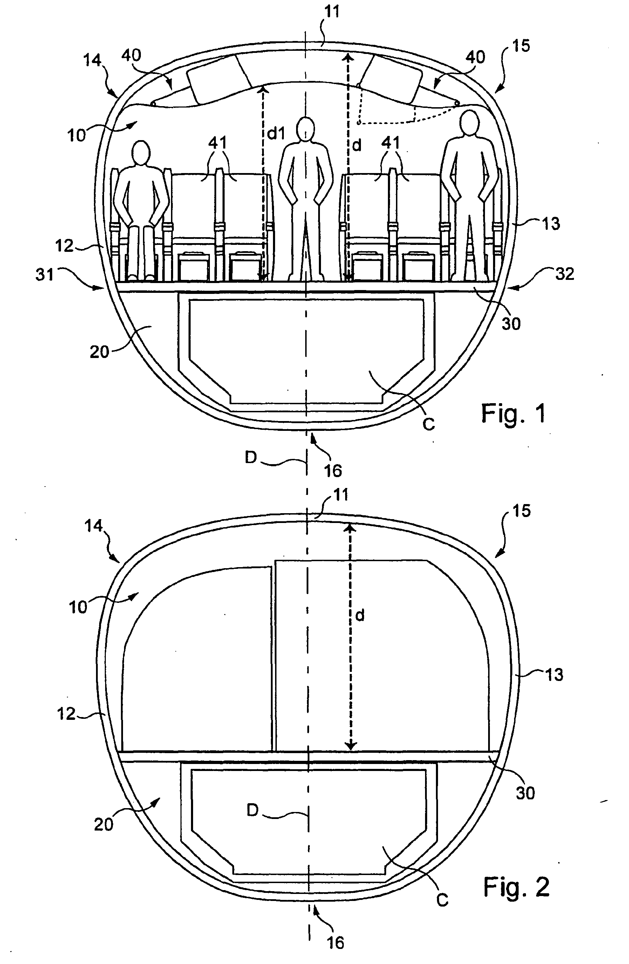

On va décrire tout d'abord en référence à la figure 1 un fuselage d'aéronef conforme à un premier mode de réalisation de l'invention, adapté au transport de passagers.

On s'intéresse dans toute la suite de la description à un fuselage de l'avion dans sa partie constante qui s'étend traditionnellement entre une portion de tête et une portion de queue qui sont profilées pour préserver l'aérodynamisme de l'aéronef.

Le fuselage présente ainsi dans une majeure partie le long de son axe longitudinal une section transversale constante, c'est-à-dire une section transversale prise dans le plan perpendiculaire à l'axe longitudinal du fuselage.

L'invention s'applique par ailleurs à un fuselage comportant deux espaces, un premier espace 10 et un second espace 20 séparés par un plancher qui s'étend dans un plan longitudinal du fuselage, c'est-à-dire dans un plan parallèle à l'axe longitudinal du fuselage.

Lorsque l'aéronef repose sur le sol, ce plancher est destiné à s'étendre dans un plan sensiblement horizontal, parallèlement au sol.

Dans la suite de la description, on dénommera espace supérieur 10, le premier espace du fuselage, disposé au-dessus du plancher lorsque l'aéronef est au sol, et espace inférieur 20, le second espace disposé sous le plancher et le premier espace lorsque l'aéronef est posé au sol.

Dans le mode de réalisation décrit à la figure 1, l'espace supérieur 10 est adapté au transport de passagers et l'espace inférieur 20 est traditionnellement utilisé comme soute à bagages.

Comme bien illustré à la figure 1, le fuselage de l'aéronef conforme à l'invention présente sensiblement une forme "Wankel" constituée principalement de trois portions de fuselage 11, 12, 13 raccordées les unes aux autres au niveau de trois zones de jonction 14, 15, 16 disposées respectivement aux trois sommets d'un triangle.

L'espace supérieur 10 de l'aéronef est ainsi défini par une première portion de fuselage 11, appelée dans la suite portion de fuselage supérieure 11, le plancher 30 et par une partie des deux autres portions de fuselage 12, 13, appelées dans la suite portions de fuselage latérales 12, 13.

Par ailleurs, le second espace 20 de l'aéronef est défini par le plancher 30, et la partie complémentaire des deux portions de fuselage latérales ainsi que leur zone de jonction 16 sensiblement au centre du fuselage.

Dans l'espace supérieur 10 du fuselage, la portion de fuselage supérieure 11 présente une longueur sensiblement égale à la largeur du plancher 30 dans la section transversale du fuselage, c'est-à-dire à la dimension du plancher 30 dans la section transversale du fuselage.

Ainsi, la jonction de la portion de fuselage supérieure 11 avec chacune des deux portions de fuselage latérales est réalisée au niveau de zones de jonction 14, 15 qui sont disposées sensiblement à l'aplomb des zones de jonction 31, 32 du plancher 30 avec chacune des deux portions de fuselage latérales 12, 13.

Comme bien illustré à la figure 1, cet espace supérieur 10 constitue un logement de forme sensiblement rectangulaire dans la section transversale de fuselage, présentant ainsi une grande logeabilité.

En particulier, la distance d séparant la portion de fuselage supérieure 11 du plancher 30 est sensiblement constante suivant la largeur du plancher 30.

En pratique, le plancher 30 s'étend dans un plan horizontal et la section de fuselage supérieure 11 est constitué d'une portion d'arc de cercle de rayon relativement important de telle sorte que la distance séparant la portion de fuselage supérieure 11 du plancher reste sensiblement constante ou présente une faible variation.

A titre d'exemple non limitatif, la variation en hauteur de cet espace supérieur 10 est comprise entre 5 et 10%.

Ainsi, si la distance d séparant la portion de fuselage supérieure 11 du plancher 30 au niveau de l'axe central de symétrie D perpendiculaire au plancher 30 est sensiblement égale à 2100 mm, la distance séparant le fuselage supérieur 11 du plancher 30 est d'au moins 1890 mm à proximité des portions de fuselage latérales 12, 13.

La valeur moyenne de la distance d séparant la portion supérieure de fuselage 11 du plancher 30 est ainsi comprise entre 1900 et 2000 mm.

Ainsi, on considèrera que la distance d séparant ladite portion de fuselage supérieure 11 et le plancher 30 reste constante suivant la largeur du fuselage dès lors que sa variation par rapport à la distance moyenne n'excède pas 10%.

Par ailleurs, cette distance d est supérieure ou égale à 1800 mm, permettant, comme bien illustré sur la figure 1, à une personne de se tenir debout en tout point de l'espace supérieur 10, c'est-à-dire tant au niveau de l'axe central D du fuselage qu'à proximité des côtés du fuselage, au niveau des portions de fuselage latérales 12, 13.

De préférence, cette distance d est comprise entre 2100 et 2200 mm, et par exemple égale à 2186 mm. Des moyens formant logements à bagages, traditionnellement constitués de casiers 40 disposés au-dessus des sièges, sont ménagés dans l'espace supérieur 10, à proximité de la portion de fuselage supérieure 11.

Ces casiers à bagages sont disposés de telle sorte que la distance d1, séparant les moyens formant logements à bagages 40 et le plancher 30 est supérieure à 1900 mm.

La distance d1 séparant ainsi ces casiers à bagages 40 disposés au-dessus des sièges 41 reste ainsi sensiblement identique dans toute la largeur du fuselage de telle sorte qu'un espace libre important existe entre la tête de chaque passager assis sur les sièges 41 et les casiers à bagages 40, quelle que soit leur position dans la section transversale du fuselage.

Par ailleurs, les casiers à bagages 40 peuvent être directement intégrés au plafond tel que bien illustré à la figure 1.

En outre, grâce à cette forme particulière de l'espace supérieur 10 de fuselage, sensiblement rectangulaire, les sièges situés à proximité des côtés du fuselage peuvent être identiques aux autres sièges, contrairement aux fuselages de l'état de la technique de forme circulaire, dans lesquels les sièges proches de la paroi latérale du fuselage doivent avoir une forme particulière.

Enfin, grâce à la forme rectangulaire de l'espace supérieur 10 du fuselage, un gain en largeur est obtenu et peut être utilisé en particulier pour prévoir une allée centrale entre les sièges relativement large.

On notera également que cette forme particulière permet d'offrir aux passagers placés à proximité des parois latérales du fuselage, plus de place, et en particulier plus de liberté, pour leur bras.

On a illustré par ailleurs à la figure 2 la même structure de fuselage, sur lequel les références numériques correspondant aux parties identiques de la figure 1 ont été reprises, pour un aéronef destiné à transporter du fret. Grâce notamment à la portion de fuselage supérieure 11 qui s'étend sensiblement à une distance constante et au moins supérieure à 1800 mm du plancher 30 dans toute la largeur du fuselage, il est possible de loger des colis de grandes tailles, correspondant à des colis de dimensions standards transportés par différents transporteurs internationaux du type Fedex, DHL, UPS.

Par ailleurs, le second espace de fuselage 20 a une forme dans la section transversale du fuselage adaptée à épouser des formes classiques de container C.

Dans le mode de réalisation décrit aux figures 1 et 2, la portion de fuselage supérieure 11 et les deux portions de fuselage latérales 12, 13 sont des portions d'arc de cercle de rayons sensiblement identiques.

Bien entendu, l'invention n'est pas limitée à ce mode particulier de réalisation.

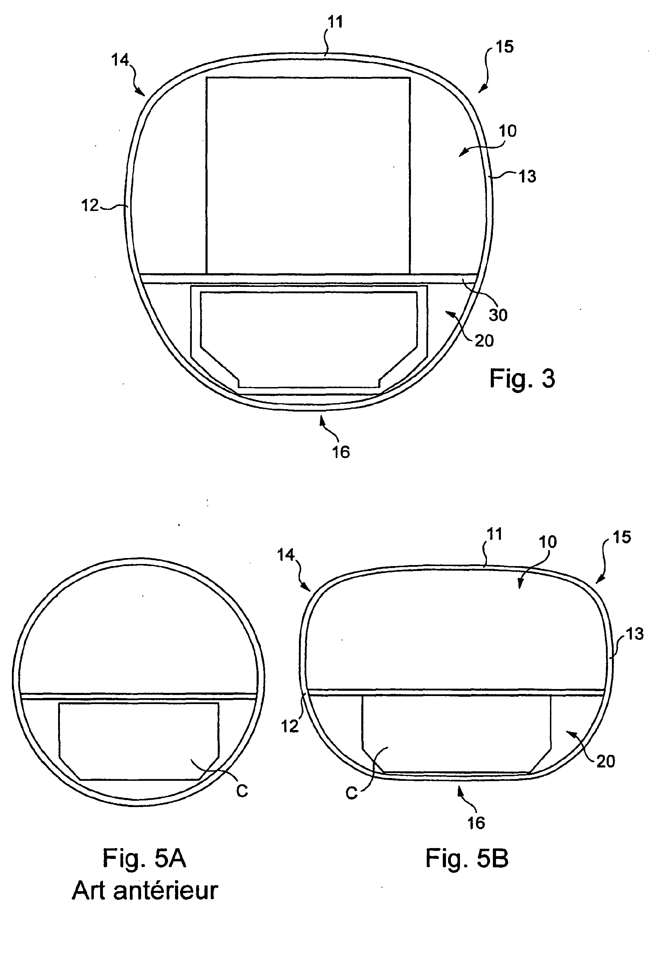

A la figure 3, les parties identiques portent les mêmes références que dans l'exemple de réalisation décrit précédemment.

Dans ce mode de réalisation, les deux portions de fuselage latérales 12, 13 sont identiques et disposées symétriquement par rapport à l'axe de symétrie D de la portion de fuselage perpendiculaire au plancher 30 dans la section transversale du fuselage.

En revanche, la portion de fuselage supérieure 11 n'est pas identique au deux portions de fuselage latérales 12, 13 mais s'étend sur un secteur angulaire plus petit que celui sur lequel s'étendent les portions de fuselage latérales 12, 13.

Ainsi, dans ce mode de réalisation, la portion de fuselage supérieure 11 présente un rayon supérieur au rayon des portions de fuselage latérales 12, 13.

Ce mode de réalisation permet encore d'augmenter la distance séparant le plancher 30 de la portion de fuselage supérieure 11 et ainsi d'obtenir un espace supérieur 10 permettant de loger notamment des colis de très grandes dimensions.

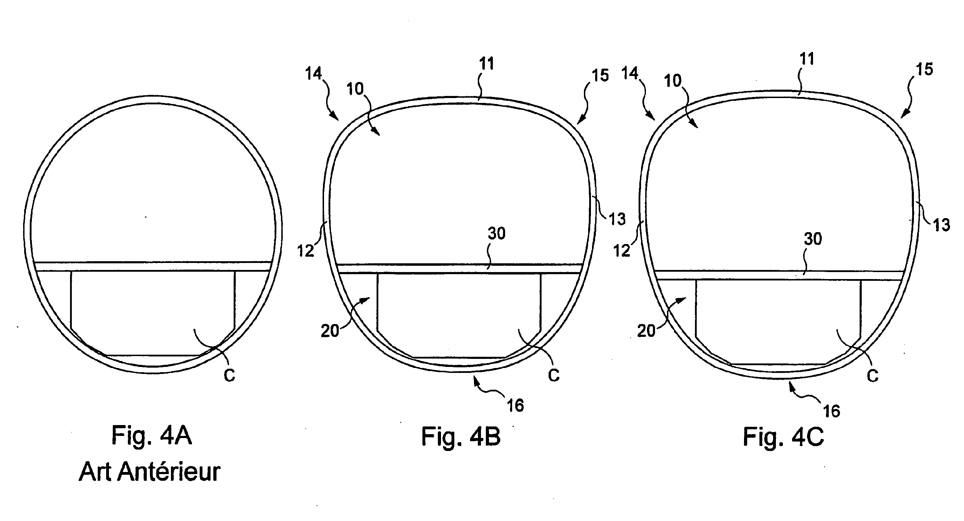

Les figures 4A, 4B et 4C illustrent ainsi à titre de comparaison pour un avion de taille moyenne différentes formes de fuselage conformes à l'invention en relation avec la forme traditionnelle de fuselage cylindrique, tel qu'illustré à la figure 4a.

La surface de la section transversale du fuselage cylindrique illustrée à la figure 4A correspond à un aéronef du type AIRBUS A320, avec une surface de section transversale sensiblement égale à 14,01 m². A titre comparatif, le fuselage tel qu'illustré à la figure 4B, correspondant au premier mode de réalisation de la figure 1, présente une surface de section transversale sensiblement égale à 15,48 m² tandis que le fuselage illustré à la figure 4C, correspondant au second mode de réalisation illustré à la figure 3, présente une surface de section transversale de l'ordre de 16,38 m².

Ainsi, il est possible pour des surfaces de section transversale de fuselage sensiblement identiques d'obtenir, grâce à la forme particulière du fuselage, un espace supérieur 10 de plus grande logeabilité et présentant un confort supérieur notamment pour le transport de passagers.

On notera à cet égard que l'espace inférieur 20 est très peu modifié dans ses dimensions de telle sorte qu'il peut remplir parfaitement sa fonction traditionnelle de soute à bagages.

On a illustré également sur la figure 5A une structure de fuselage cylindrique pour un aéronef de grandes dimensions, du type AIRBUS A330/A340, dont la surface de la section transversale du fuselage peut atteindre 24,98 m².

Comme illustré à la figure 5B, la présente invention vise également à protéger un mode de réalisation dans lequel la largeur du fuselage au niveau du plancher est augmentée par rapport à un fuselage d'un aéronef traditionnel.

Grâce à la forme particulière du fuselage conforme à l'invention, dans lequel celui-ci n'est pas cylindrique mais présente au moins trois portions de fuselage raccordées les unes aux autres, et une portion de fuselage supérieure qui s'étend sensiblement à distance constante du plancher 30, il est possible avec un plancher de grande largeur de maintenir une surface de section transversale sensiblement identique à celle d'un avion traditionnel à fuselage cylindrique.

A titre d'exemple, le fuselage de l'aéronef tel qu'illustré à la figure 5B peut présenter une surface de section transversale sensiblement égale à 29,96 m².

## Revendications

1. Aéronef comprenant un fuselage comportant un plancher (30) s'étendant dans un plan longitudinal dudit fuselage et séparant un premier espace (10) d'un second espace (20) logés dans le fuselage, ledit fuselage comportant trois portions de fuselage (11, 12, 13) constituées de portions d'arc de cercle dans la section transversale du fuselage, le premier espace (10) comportant une portion de fuselage (11) de longueur sensiblement égale à la largeur dudit plancher (30) dans la section transversale du fuselage, la distance (d) séparant ladite portion de fuselage (11) et ledit plancher (30) étant sensiblement constante suivant ladite largeur, **caractérisé en ce que** les deux autres portions de fuselage (12, 13) s'étendent d'une part entre ladite portion de fuselage (11) et le plancher (30) dudit premier espace (10) et d'autre part, dans ledit second espace du fuselage (20), ladite portion de fuselage (11) et lesdites deux autres portions de fuselage (12, 13) étant des portions d'arc de cercle dans la section transversale du fuselage de rayon identique et s'étendant sur un secteur angulaire identique.

2. Aéronef conforme à la revendication 1, **caractérisé en ce que** ladite distance (d) est supérieure ou égale à 1800 mm, et de préférence supérieure à 2000 mm.

3. Aéronef conforme à l'une des revendications 1 ou 2, **caractérisé en ce que** ladite distance (d) est comprise entre 2100 et 2200 mm, des moyens formant logement à bagages (40) étant ménagés dans ledit premier espace (10) à proximité de ladite portion de fuselage (11), la distance (d1) séparant lesdits moyens formant logement à bagages (40) et ledit plancher (30) étant supérieure à 1900 mm.

4. Aéronef conforme à l'une des revendications 1 à 3, **caractérisé en ce que** ledit premier espace (10) présente une forme sensiblement rectangulaire dans la section transversale du fuselage.

5. Aéronef conforme à l'une des revendications 1 à 4, **caractérisé en ce que** lesdites deux autres portions de fuselage (12, 13) sont disposées symétriquement par rapport à un axe de symétrie (D) de ladite portion de fuselage (11) perpendiculairement audit plancher (30) dans la section transversale du fuselage.

6. Aéronef conforme à l'une des revendications 1 à 6, **caractérisé en ce que** la jonction (14, 15) de ladite portion de fuselage (11) avec chacune desdites deux autres portions de fuselage (12, 13) est réalisée sensiblement à l'aplomb respectivement de la jonction (31, 32) du plancher (30) avec chacune desdites deux autres portions de fuselage (12, 13).

7. Aéronef conforme à l'une des revendications 1 à 6, **caractérisé en ce que** ledit fuselage comporte en outre une quatrième portion de fuselage (16) adaptée à relier lesdites deux autres portions de fuselage (12, 13) dans ledit second espace du fuselage (20).

8. Aéronef conforme à l'une des revendications 1 à 7, **caractérisé en ce que** ledit second espace du fuselage (20) présente une forme dans la section transversale du fuselage adaptée à épouser des formes de container (C).

## Claims

1. Aircraft comprising a fuselage having a floor (30) extending in a longitudinal plane of the said fuselage and separating a first space (10) from a second space (20) accommodated in the fuselage, said fuselage having three fuselage portions (11, 12, 13) constituted by portions of circle arc in the transverse section of the fuselage, the first space (10) having a fuselage portion (11) of a length substantially equal to the width of the said floor (30) in the transverse section of the fuselage, the distance (d) separating the said fuselage portion (11) and the said floor (30) being substantially constant over the said width, **characterized in that** the two other fuselage portions (12, 13) extend between the said fuselage portion (11) and the floor (30) of the said first space (10) and extend in the said second fuselage space (20), the said fuselage portion (11) and the said two other fuselage portions being portions of circle arc in the transverse section of the fuselage of identical radius and extending through an identical angular sector.

2. Aircraft according to claim 1, **characterized in that** the said distance (d) is greater than or equal to 1800 mm, and preferably greater than 2000 mm.

3. Aircraft according to one of claims 1 or 2, **characterized in that** the said distance (d) is comprised between 2100 and 2200 mm, means creating baggage accommodation (40) being provided in the said first space (10) in the vicinity of the said fuselage portion (11), the distance (d1) separating the said means creating baggage accommodation (40) and the said floor (30) being greater than 1900 mm.

4. Aircraft according to one of claims 1 to 3, **characterized in that** the said first space (10) has a substantially rectangular form in the transverse section of the fuselage.

5. Aircraft according to one of claims 1 to 4, **characterized in that** the said two other fuselage portions (12, 13) are arranged symmetrically in relation to an axis of symmetry (D) of the said fuselage portion (11) perpendicular to the said floor (30) in the transverse section of the fuselage.

6. Aircraft according to one of claims 1 to 6, **characterized in that** the junction (14, 15) of the said fuselage portion (11) with each of the said two other fuselage portions (12, 13) is formed in substantially vertically aligned relationship respectively relative to the junction (31, 32) of the floor (30) with each of the said two other fuselage portions (12, 13).

7. Aircraft according to one of claims 1 to 6, **characterized in that** the said fuselage furthermore has a fourth fuselage portion (16) adapted to connect the said two other fuselage portions (12, 13) in the said second fuselage space (20).

8. Aircraft according to one of claims 1 to 7, **characterized in that** the said second space (20) of the fuselage has a shape in the transverse section of the fuselage adapted to conform to container shapes (C).

## Patentansprüche

1. Luftfahrzeug mit einem Rumpf, der einen Boden (30) aufweist, der sich über eine Längsebene des Rumpfes erstreckt und einen ersten Raum (10) von einem zweiten Raum (20), die sich in dem Rumpf befinden, trennt, wobei der Rumpf drei Rumpfabschnitte (11, 12, 13) umfasst, die im Querschnitt des Rumpfes aus Kreisbogenabschnitten gebildet sind, wobei der erste Raum (10) im Querschnitt des Rumpfes einen Rumpfabschnitt (11) mit einer Länge im Wesentlichen gleich der Breite des Bodens (30) umfasst, wobei der Abstand (d), der den Rumpfabschnitt (11) und den Boden (30) trennt, in Richtung der genannten Breite im Wesentlichen konstant ist, **dadurch gekennzeichnet, dass** die zwei anderen Rumpfabschnitte (12, 13) sich einerseits zwischen dem genannten Rumpfabschnitt (11) und dem Boden (30) des ersten Raums (10) und andererseits in dem zweiten Rumpfraum (20) erstrecken, wobei der genannte Rumpfabschnitt (11) und die zwei anderen Rumpfabschnitte (12, 13) im Querschnitt des Rumpfes Kreisbogenabschnitte mit identischem Radius sind und sich über einen identischen Winkelsektor erstrecken.

2. Luftfahrzeug nach Anspruch 1,
**dadurch gekennzeichnet, dass** der Abstand (d) größer oder gleich 1800 mm, und bevorzugt größer als 2000 mm ist.

3. Luftfahrzeug nach einem der Ansprüche 1 oder 2,
**dadurch gekennzeichnet, dass** der Abstand (d) zwischen 2100 und 2200 mm umfasst, wobei Mittel, die einen Gepäckraum (40) bilden, in dem ersten Raum (10) in der Nähe des Rumpfabschnittes (11) vorgesehen sind, wobei der Abstand (d1), der die Mittel, die den Gepäckraum (40) bilden, und den Boden (30) trennt, größer als 1900 mm ist.

4. Luftfahrzeug nach einem der Ansprüche 1 bis 3,
**dadurch gekennzeichnet, dass** der erste Raum (10) im Querschnitt des Rumpfes eine im Wesentlichen rechteckige Form aufweist.

5. Luftfahrzeug nach einem der Ansprüche 1 bis 4,
**dadurch gekennzeichnet, dass** die zwei anderen Rumpfabschnitte (12, 13) im Querschnitt des Rumpfes symmetrisch mit Bezug auf eine rechtwinklig zu dem Boden (30) stehende Symmetrieachse (D) des Rumpfabschnittes (11) angeordnet sind.

6. Luftfahrzeug nach einem der Ansprüche 1 bis 5,
**dadurch gekennzeichnet, dass** der Übergang (14, 15) des Rumpfabschnittes (11) mit jedem der zwei anderen Rumpfabschnitte (12, 13) im Wesentlichen jeweils senkrecht zu dem Übergang (31, 32) des Bodens (30) mit jedem der zwei anderen Rumpfabschnitte (12, 13) realisiert ist.

7. Luftfahrzeug nach einem der Ansprüche 1 bis 6,
**dadurch gekennzeichnet, dass** der Rumpf außerdem einen vierten Rumpfabschnitt (16) umfasst, der ausgebildet ist, um die zwei anderen Rumpfabschnitte (12, 13) in dem zweiten Rumpfraum (20) zu verbinden.

8. Luftfahrzeug nach einem der Ansprüche 1 bis 7,
**dadurch gekennzeichnet, dass** der zweite Rumpfraum (20) im Querschnitt des Rumpfes eine Form aufweist, die ausgebildet ist, um sich an Containerformen (C) anzuschmiegen.
